(19)
Europäisches
Patentamt
European
Patent Office
Office européen
des brevets

(11) **EP 3 719 095 A1**

(12) **EUROPEAN PATENT APPLICATION**
published in accordance with Art. 153(4) EPC

(43) Date of publication:
07.10.2020 Bulletin 2020/41

(21) Application number: 18884463.3

(22) Date of filing: 28.11.2018

(51) Int Cl.:
*C09J 201/00* (2006.01)  *C09J 7/00* (2018.01)
*C09J 11/06* (2006.01)  *C09J 11/08* (2006.01)
*C09J 121/00* (2006.01)  *C09J 175/04* (2006.01)

(86) International application number:
**PCT/JP2018/043865**

(87) International publication number:
**WO 2019/107447 (06.06.2019 Gazette 2019/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 29.11.2017 JP 2017229396

(71) Applicant: **Nitto Denko Corporation**
**Ibaraki-shi, Osaka 567-8680 (JP)**

(72) Inventors:
• **TANI, Kensuke**
**Ibaraki-shi**
**Osaka 567-8680 (JP)**
• **KIRA, Yoshiko**
**Ibaraki-shi**
**Osaka 567-8680 (JP)**

(74) Representative: **Müller-Boré & Partner**
**Patentanwälte PartG mbB**
**Friedenheimer Brücke 21**
**80639 München (DE)**

(54) **ADHESIVE AGENT COMPOSITION, ADHESIVE AGENT LAYER, AND ADHESIVE SHEET**

(57)    Provided are an adhesive composition which can give high adhesive force to a wet surface and also ensures storage stability of a moisture-curable component, an adhesive layer made from the adhesive composition, and an adhesive sheet including the adhesive layer. An adhesive composition including a base polymer and a moisture-curable component, wherein the base polymer contains a polymer having a functional group that becomes a functional group capable of reacting with the moisture-curable component through a reaction with water, and the moisture-curable component is contained in an unreacted state.

EP 3 719 095 A1

**Description**

TECHNICAL FIELD

The present invention relates to an adhesive composition, an adhesive layer made from the adhesive composition, and an adhesive sheet including the adhesive layer.

BACKGROUND ART

Conventionally, a primer composition has been used for the purpose of waterproofing of concrete and the like. For example, Patent Literature 1 describes that a coating composition obtained by mixing a specific resin composition and a specific moisture-curable solution can be used as a primer composition having excellent close adhesiveness to a wet surface.

Further, Patent Literature 2 describes a photopolymerizable composition which can provide a moisture-curable adhesive having sufficient adhesive strength to an adherend having an uneven surface such as an inorganic material, e.g., concrete or the like, or wood by photopolymerization, and a moisture-curable adhesive sheet obtained by using this composition.

CITATION LIST

PATENT LITERATURE

Patent Literature 1: JP-A-2001-354749
Patent Literature 2: JP-A-2000-273418

SUMMARY OF INVENTION

TECHNICAL PROBLEM

However, since the coating composition described in Patent Literature 1 is used as a liquid primer composition and requires a coating operation and subsequent drying, there is a problem in view of operation efficiency.

Moreover, in Patent Literature 2, the adhesive strength to an adherend having an uneven surface such as an inorganic material, e.g., concrete or the like, or wood is investigated but the adhesive strength to a wet surface is not investigated at all.

The present inventors have conducted extensive studies for the purpose of providing an adhesive sheet capable of satisfactorily adhering to a wet surface, and as a result, it has been conceived to use an adhesive composition containing a moisture-curable component in an unreacted state as an adhesive composition for forming an adhesive layer. In addition, they have found that, in order to further improve the adhesive strength to the wet surface, it may be useful to use a base polymer capable of reacting with the moisture-curable component in an unreacted state. On the other hand, when the base polymer capable of reacting with the moisture-curable component in an unreacted state is used, there has been found a problem that a crosslinking reaction between the moisture-curable component and the base polymer may proceed before the adhesive sheet is pasted to the wet surface and thus storage stability of the moisture-curable component cannot be ensured. In such a case, as a result of the progress of gelation of the adhesive composition, there is a concern that it becomes difficult to produce an adhesive layer or an adhesive sheet or paste the adhesive sheet to an adherend, or a sufficient adhesive force is not exhibited after pasting.

Accordingly, an object of the present invention is to provide an adhesive composition which can give high adhesive force to a wet surface and also ensures the storage stability of a moisture-curable component, an adhesive layer made from the adhesive composition, and an adhesive sheet including the adhesive layer.

SOLUTION TO PROBLEM

One aspect of the present invention relates to an adhesive composition containing a base polymer and a moisture-curable component, wherein the base polymer contains a polymer having a functional group that becomes a functional group capable of reacting with the moisture-curable component through a reaction with water, and the moisture-curable component is contained in an unreacted state.

In one aspect of the present invention, the moisture-curable component may be capable of chemically bonding to an adherend.

In one aspect of the present invention, the moisture-curable component may be an isocyanate compound.

In one aspect of the present invention, a content of the moisture-curable component may be 1 to 100 parts by weight based on 100 parts by weight of the base polymer.

In one aspect of the present invention, the base polymer may contain a rubber-based polymer.

In one aspect of the present invention, the polymer may be a polymer modified with maleic anhydride.

In one aspect of the present invention, the adhesive composition may further contain a water-absorbing material.

In one aspect of the present invention, the water-absorbing material may be a water-absorbing polymer.

In one aspect of the present invention, a content of the water-absorbing material may be 1 to 100 parts by weight based on 100 parts by weight of the base polymer.

Further, one aspect of the present invention relates to an adhesive layer including the above-mentioned adhesive composition.

Moreover, one aspect of the present invention relates to an adhesive sheet including the above-mentioned adhesive layer.

In one aspect of the present invention, the adhesive layer may be formed on a substrate.

ADVANTAGEOUS EFFECTS OF INVENTION

According to the present invention, there are provided an adhesive composition which can give high adhesive force to a wet surface and also ensures storage stability of a moisture-curable component, an adhesive layer made from the adhesive composition, and an adhesive sheet including the adhesive layer.

DESCRIPTION OF EMBODIMENTS

Hereinafter, embodiments of the present invention will be described in detail.

An adhesive composition according to an embodiment of the present invention is an adhesive composition containing a base polymer and a moisture-curable component, wherein the base polymer contains a polymer having a functional group that becomes a functional group capable of reacting with the moisture-curable component through the reaction with water, and the moisture-curable component is contained in an unreacted state.

When an adhesive layer made from the adhesive composition according to the present embodiment or an adhesive sheet including the adhesive layer (hereinafter collectively also referred to as adhesive sheet) is pasted to a wet surface of an adherend, the moisture-curable component contained in an unreacted state in the adhesive composition (adhesive layer) reacts with water absorbed from the wet surface of the adherend or water such as surrounding water or moisture to undergo moisture curing, and thereby, the adhesive force to the adherend is increased. As a result, when the adhesive sheet is pasted to the wet surface of the adherend, the adhesive force is increased with time and high adhesive force can be exhibited. Incidentally, the case where the moisture-curable component is capable of chemically bonding to the adherend is preferred because the adhesive force to the adherend surface is further improved by the progress of the chemical bond between the moisture-curable component capable of chemically bonding to the adherend contained in an unreacted state in the adhesive composition (adhesive layer) and the adherend surface.

Moreover, in the adhesive composition of the present embodiment, since the base polymer contains a polymer having a functional group that becomes a functional group capable of reacting with the moisture-curable component through a reaction with water, when an adhesive sheet including an adhesive layer made from the adhesive composition of the present embodiment is attached to the wet surface of the adherend, the polymer having the functional group becomes a polymer having a functional group capable of reacting with the moisture-curable component through a reaction with water or the like absorbed from the wet surface. Then, in addition to the curing of the moisture-curable component itself in the unreacted state described above, a crosslinking reaction between the polymer having a functional group capable of reacting with the moisture-curable component and the moisture-curable component also progresses, and thereby the cohesive force of the adhesive layer is further improved and the adhesiveness is more improved.

Further, the polymer having a functional group that becomes a functional group capable of reacting with the moisture-curable component through a reaction with water, which is contained in the base polymer, does not react with the moisture-curable component before the reaction with water, so that storage stability of the moisture-curable component is ensured until the adhesive sheet is pasted to the wet surface. Here, from the viewpoint of ensuring the storage stability of the moisture-curable component, it is considered to use a nonpolar polymer that does not react with the moisture-curable component, but since the nonpolar polymer does not react with the moisture-curable component, the strength of the adhesive layer as a whole becomes low.

In the adhesive composition of the present embodiment, as the base polymer, for example, rubber-based polymers, acrylic polymers, silicone-based polymers, urethane-based polymers, and the like may be mentioned. Of these, one kind or two or more kinds can be appropriately selected and used. Among them, rubber-based polymers and acrylic polymers are preferable from the viewpoint of adhesiveness, and rubber-based polymers are more preferable from the viewpoint of application under a low temperature environment.

In the present embodiment, the base polymer contains a polymer having a functional group that becomes a functional group capable of reacting with the moisture curable component (moisture curing agent) through a reaction with water (water or moisture). Examples of such a polymer include polymers and the like modified with maleic anhydride, a hydroxyl group, an amine group, or the like. Among them, from the viewpoint of storage stability of the moisture curing agent, polymers modified with maleic anhydride (maleic anhydride-modified polymers) are preferred. For example, the maleic anhydride group of the polymer modified with maleic anhydride is ring-opened by the reaction with water to become a carboxyl group. The polymer having the carboxyl group and the moisture-curable component can undergo a crosslinking reaction.

Examples of the aforementioned polymer having a functional group that becomes a functional group capable of reacting with the moisture-curable component through a reaction with water include rubber-based polymers, acrylic polymers, silicone polymers, urethane polymers, and the like, which are modified with maleic anhydride, a hydroxyl group, an amine group, or the like.

Examples of the polymer subjected to modification include, as the rubber-based polymers, isobutylene-based polymers such as polyisobutylene (PIB), copolymers of isobutylene and normal butylene, copolymers of isobutylene and isoprene (e.g., butyl rubbers such as regular butyl rubber, chlorinated butyl rubber, brominated butyl rubber and partially crosslinked butyl rubber), and vulcanized products thereof; styrene-based thermoplastic elastomers such as styrene-ethylene-butylene-styrene block copolymer (SEBS), styrene-isoprene-styrene block copolymer (SIS), isoprene rubber (IR), styrene-butadiene-styrene block copolymer (SBS), styrene-ethylene-propylene-styrene block copolymer (SEPS, a hydrogenated product of SIS), styrene-ethylene-propylene block copolymer (SEP, a hydrogenated product of styrene-isoprene block copolymer), styrene-isobutylene-styrene block copolymer (SIBS), styrene-butadiene rubber (SBR) and other styrene-based block copolymers; butyl rubber (IIR), butadiene rubber (BR), acrylonitrile-butadiene rubber (NBR), EPR (binary ethylene-propylene rubber), EPT (ternary ethylene-propylene rubber), acrylic rubber, urethane rubber, silicone rubber, and the like. Among them, PIB, IIR, IR, SEBS and SIS are preferable, and SIS is more preferable, from the viewpoint of moisture permeability and processing stability. Only one kind of these may be used alone, or two or more kinds thereof may be used in combination. Further, the rubber-based polymer blended in the adhesive composition may be solid rubber or liquid rubber, or both of them may be blended.

In addition, the base polymer may contain a polymer (hereinafter, also referred to as other polymer) other than the aforementioned polymer having a functional group that becomes a functional group capable of reacting with the moisture-curable component through a reaction with water, in the range where the advantageous effects of the present invention are not significantly impaired. In that case, the content ratio of the other polymer to the entire base polymer (100% by weight) is preferably 90% by weight or less, and more preferably 75% by weight or less. Further, the content ratio of the other polymer may be 0% by weight (not contained), but when the other polymer is contained, it is preferably 10% by weight or more, and more preferably 20% by weight or more.

Moreover, the content of the polymer having a functional group that becomes a functional group capable of reacting with the moisture-curable component through a reaction with water may be 100% by weight based on the entire base polymer (100% by weight). When the other polymer is contained, the content mentioned above is preferably 90% by weight or less, more preferably 75% by weight or less, and still more preferably 70% by weight or less. Further, the content of the polymer having a functional group that becomes a functional group capable of reacting with the moisture-curable component through a reaction with water is preferably 5% by weight or more, more preferably 10% by weight or more, and still more preferably 30% by weight or more, in order to satisfactorily exhibit the above effects.

Examples of the other polymer include unmodified rubber-based polymers, acrylic polymers, silicone-based polymers, urethane-based polymers and the like. Examples of the unmodified rubber-based polymer include the rubber-based polymers that are subjected to the modification with maleic anhydride or the like as described above. Further, the other polymer may be a polymer having a functional group that does not react with the moisture-curable component.

In the adhesive composition of the present embodiment, from the viewpoint of storage stability of the moisture-curable component before pasting the adhesive sheet to the wet surface of an adherend, the polymer having a functional group capable of reacting with the moisture-curable component is preferably not contained in the base polymer. Here, as the functional group which reacts with the moisture-curable component, there may be mentioned polar functional groups such as a carboxyl group, a hydroxyl group, an amide group, an amino group, a glycidyl group, a cyano group, a vinyl group, a sulfonic acid group, a phosphoric acid group, an imide group, an isocyanate group, an alkoxy group and a silanol group.

In the case where the adhesive composition contains a polymerization initiator, a curing reaction by heat or an active energy ray using a polymerization initiator such as a thermal polymerization initiator or a photopolymerization initiator (photoinitiator) can be utilized. The polymerization initiator can be used alone, or two or more kinds can be used in combination.

The photopolymerization initiator is not particularly limited, and there can be used, for example, benzoin ether-based photopolymerization initiators, acetophenone-based photopolymerization initiators, $\alpha$-ketol-based photopolymerization initiators, aromatic sulfonyl chloride-based photopolymerization initiators, photoactive oxime-based photopolymerization initiators, benzoin-based photopolymerization initiators, benzil-based photopolymerization initiators, benzophenone-based photopolymerization initiators, ketal-based photopolymerization initiators, thioxanthone-based photopolymerization initiators, and the like.

Specifically, examples of the benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one, anisole methyl ether, and the like. Examples of the acetophenone-based photopolymerization initiators include 2,2-diethoxyacetophenone, 2,2-dimethoxy-2-phenylacetophenone, 1-hydroxycyclohexyl phenyl ketone, 4-phenoxydichloroacetophenone, 4-(t-butyl)dichloroacetophenone, and the like. Examples of the $\alpha$-ketol-based photopolymerization initiators include 2-methyl-2-hydroxypropiophenone, 1-[4-(2-hydroxyethyl)phenyl]-2-methylpropan-1-one, and the like. Examples of the aromatic sulfonyl chloride-based photopolymerization initiators include 2-naphthalene sulfonyl chloride and the like. Examples of the photoactive oxime-based photopolymerization initiators include 1-phenyl-1,1-propanedione-2-(o-ethoxycarbonyl)-oxime and the like.

The benzoin photopolymerization initiators include, for example, benzoin and the like. The benzil-based photopolymerization initiators include, for example, benzil and the like. The benzophenone-based photopolymerization initiators include, for example, benzophenone, benzoylbenzoic acid, 3,3'-dimethyl-4-methoxybenzophenone, polyvinylbenzophenone, $\alpha$-hydroxycyclohexyl phenyl ketone, and the like. The ketal-based photopolymerization initiators includes, for example, benzyl dimethyl ketal and the like. The thioxanthone-based photopolymerization initiators include, for example, thioxanthone, 2-chlorothioxanthone, 2-methylthioxanthone, 2,4-dimethylthioxanthone, isopropylthioxanthone, 2,4-diisopropylthioxanthone, dodecylthioxanthone, and the like.

The amount of the photopolymerization initiator to be used is not particularly limited, and can be selected from the range of, for example, 0.01 to 5 parts by weight (preferably 0.05 to 3 parts by weight) based on 100 parts by weight of all the monomer components for forming the base polymer (or the base polymer).

At the time of activation of the photopolymerization initiator, irradiation with active energy rays is performed. Examples of such active energy rays include ionizing radiations such as alpha rays, beta rays, gamma rays, neutron rays, and electron rays, ultraviolet rays, and the like. Particularly, ultraviolet rays are preferable. Further, the irradiation energy of the active energy rays, the irradiation time thereof, and the like are not particularly limited as long as the photopolymerization initiator can be activated to generate the reaction of the monomer components.

Examples of the above thermal polymerization initiator include azo polymerization initiators [e.g., 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride, etc.], peroxide-based polymerization initiators (e.g., dibenzoyl peroxide, tert-butyl permaleate, etc.), redox polymerization initiators, and the like. The amount of the thermal polymerization initiator to be used is not particularly limited, and may be in the range that can be conventionally used as a thermal polymerization initiator.

The content of the photopolymerization initiator is not particularly limited, and is, for example, 0.001 parts by weight or more, preferably 0.05 parts by weight or more and 5 parts by weight or less, preferably 3 parts by weight or less based on 100 parts by weight of all the monomer components for forming the base polymer (or the base polymer).

The content of the base polymer in the adhesive composition according to the present embodiment is not particularly limited, but from the viewpoint of the initial adhesive force, based on all the components of the adhesive composition excluding the solvent, that is, when the total amount of the components of the adhesive composition excluding the solvent is regarded as 100% by weight, the content is preferably 5% by weight or more, more preferably 10% by weight or more, and still more preferably 20% by weight or more. Further, the content of the base polymer is, from the viewpoint of containing the moisture-curable component and the like, preferably 90% by weight or less, more preferably 80% by weight or less, and still more preferably 70% by weight or less based on all the components of the adhesive composition excluding the solvent.

In the present embodiment, the moisture-curable component is a component having a property (moisture curability) that causes a curing reaction due to the presence of water (water or moisture). For example, the moisture-curable component includes a resin or a compound which has, in the molecule, one or more hydrolyzable reactive groups or functional groups that start the reaction with water, and which starts curing with water (water or moisture) in the surroundings such as the air.

The moisture-curable component to be used in the adhesive composition of the present embodiment has moisture curability. The moisture-curable component is contained in the adhesive composition in an unreacted state. When an adhesive sheet including an adhesive layer made from the adhesive composition of the present embodiment is pasted to an adherend, the moisture-curable component itself in an unreacted state is cured with the water absorbed from the wet surface or the water such as surrounding water or moisture and thereby adhesiveness is improved. Moreover, the moisture-curable component is preferably a component capable of chemically bonding to the adherend to which the adhesive sheet is pasted. In such a case, the adhesiveness is further improved by the progress of chemical bonding between the moisture-curable component in an unreacted state and the adherend.

Further, the base polymer of the adhesive composition of the present embodiment contains a polymer having a functional group that becomes a functional group capable of reacting with the moisture-curable component through a reaction with water. Therefore, when the adhesive sheet including an adhesive layer made of the adhesive composition of the present embodiment is pasted to the wet surface of the adherend, the polymer having the functional group becomes a polymer having a functional group capable of reacting with the moisture-curable component through a reaction with water absorbed from the wet surface or the like. Then, in addition to the curing of the moisture-curable component itself, a crosslinking reaction between the polymer having a functional group capable of reacting with the moisture-curable component and the moisture-curable component also proceeds, so that the cohesive force of the adhesive layer is further increased, and the adhesiveness is more improved.

As the moisture-curable component to be used in the present embodiment, isocyanate compounds, alkoxysilyl group-containing polymers, cyanoacrylate-based compounds, urethane-based compounds, and the like may be mentioned. Among them, isocyanate compounds and alkoxysilyl group-containing polymers are preferable in view of compatibility and curing speed, and isocyanate compounds are more preferable. As the moisture-curable component, only one kind may be used alone, or two or more kinds may be used in combination.

An isocyanate compound (isocyanate) is hydrolyzed in the presence of water to form an amine, and curing is achieved by the reaction of the isocyanate with the amine to form a urea bond. In addition, an isocyanate compound can form a chemical bond with a hydroxyl group, an amino group, a carboxyl group, and the like on the surface of an adherend.

As the isocyanate compound, aliphatic isocyanates, alicyclic isocyanates, and aromatic isocyanates may be mentioned. Among them, aliphatic isocyanates and alicyclic isocyanates are preferable because they have good compatibility with the polymer to be the base polymer, particularly a rubber-based polymer and have a mild reactivity with water.

As the aliphatic isocyanates, there may be mentioned ethylene diisocyanate, propylene diisocyanate, tetramethylene diisocyanate, hexamethylene diisocyanate (HDI), trimethylhexamethylene diisocyanate (TMHMDI), dodecamethylene diisocyanate, lysine diisocyanate (LDI), lysine triisocyanate (LTI), and the like.

As the alicyclic isocyanate, there may be mentioned isophorone diisocyanate (IPDI), cyclohexylene diisocyanate (CHDI), 4,4'-dicyclohexylmethane diisocyanate, hydrogenated XDI ($H_6$XDI), hydrogenated MDI ($H_{12}$MDI), norbornene diisocyanate (NBDI), and the like.

As the aromatic isocyanates, there may be mentioned diphenylmethane diisocyanates (MDI) such as 4,4'-diphenylmethane diisocyanate, 2,4'-diphenylmethane diisocyanate, and 2,2'-diphenylmethane diisocyanate; crude diphenylmethane diisocyanate; polynuclear polyphenylene polymethyl polyisocyanate (polymeric MDI); tolylene diisocyanates (TDI) such as 2,4-toluene diisocyanate and 2,6-toluene diisocyanate; naphthalene diisocyanates (NDI) such as 1,4-naphthalene diisocyanate and 1,5-naphthalene diisocyanate; 1,5-tetrahydronaphthalene diisocyanate; phenylene diisocyanates (PDI) such as 1,2-phenylene diisocyanate, 1,3-phenylene diisocyanate, and 1,4-phenyl diisocyanate; xylene diisocyanates (XDI); tetramethylxylylene diisocyanate (TMXDI); tolidine diisocyanate (TODI); 2,4,6-trimethylphenyl-1,3-diisocyanate, 2,4 6-triisopropylphenyl-1,3-diisocyanate, chlorophenylene-2,4-diisocyanate, 4,4'-diphenyl ether diisocyanate, 3,3'-dimethyl-4,4'-diphenylmethane diisocyanate, 3,3'-dimethoxy-4,4'-diphenylene diisocyanate, 3,3'-dichloro-4,4'-biphenylene diisocyanate, and the like.

An alkoxysilyl group-containing polymer is hydrolyzed in the presence of water to form a silanol and is cured through condensation (crosslinking). In addition, an alkoxysilyl group-containing polymer can form a strong chemical bond through a dehydration condensation reaction, or the like with a hydroxyl group on the surface of an adherend.

As the alkoxysilyl group-containing polymer, for example, there can be used one or more selected from linear dimethoxy group-both terminal type ones such as Silyl SAX220 and Silyl SAT350, linear dimethoxy group-one terminal type ones such as Silyl SAT145, linear trimethoxy group-both terminal type ones such as Silyl SAX510 and Silyl SAT580, branched dimethoxy group-terminal type ones such as Silyl SAT400, and acrylic modified type ones such as Silyl MA440, Silyl MA903, and Silyl MA904 manufactured by Kaneka Corporation.

The content of the moisture-curable component in the adhesive composition according to the present embodiment is not particularly limited, but from the viewpoint of obtaining high adhesive force, based on 100% by weight of the base polymer, the content is preferably 1 part by weight or more, more preferably 2 parts by weight or more, and still more preferably 5 parts by weight or more. In addition, from the viewpoint of product life and pot life and the viewpoint of prevention of decreased adhesiveness owing to too hard adhesive layer resulting from excess curing, the content of the moisture-curable component is preferably 100 parts by weight or less, more preferably 90 parts by weight or less, still more preferably 80 parts by weight or less, and particularly preferably 50 parts by weight based on 100 parts by weight of the base polymer.

The adhesive composition of the present embodiment preferably further contains a water-absorbing material. Here, in the present embodiment, the water-absorbing material refers to a material capable of absorbing and retaining water. When the adhesive composition contains the water-absorbing material, at the time when the adhesive sheet is pasted to the wet surface of the adherend, the water-absorbing material absorbs and retains the water on the wet surface, which interferes with the adhesion between the adhesive sheet and the adherend, and thereby the initial adhesive force to the adherend, which is required for the adhesive sheet, is well exhibited. In addition, since the water on the wet surface of the adherend is absorbed and removed by the water-absorbing material, the adhesive sheet can well follow even to an adherend having an uneven surface. As a result, the adhesiveness to the wet surface is more easily improved.

As the water-absorbing material, an organic water-absorbing material such as a water-absorbing polymer or an inorganic water-absorbing material can be used. As the water-absorbing material, only one kind may be used alone, or two or more kinds may be used in combination.

Examples of the water-absorbing polymer include polyacrylic acids, water-soluble celluloses, polyvinyl alcohols, polyethylene oxides, starches, alginic acids, chitins, polysulfonic acids, polyhydroxymethacrylates, polyvinylpyrrolidones, polyacrylamides, polyethyleneimines, polyallylamines, polyvinylamines, maleic anhydrides, copolymers thereof, and the like. As the water-absorbing polymer, only one kind may be used alone, or two or more kinds may be used in combination.

Among them, a polyacrylic acid sodium salt or a copolymer of maleic anhydride and polyisobutylene is preferable, and a copolymer of maleic anhydride and polyisobutylene is more preferable.

A commercially available product may be used as the water-absorbing polymer. As commercially available products of the water-absorbing polymers, there can be suitably used, for example, KC Flock (cellulose powder, manufactured by Nippon Paper Chemicals Co., Ltd.), Sunrose (carboxymethyl cellulose, manufactured by Nippon Paper Chemicals, Co., Ltd.), Aqualic CA (acrylic acid polymer partial sodium salt crosslinked product, manufactured by Nippon Shokubai Co., Ltd.), Acryhope (acrylic acid polymer partial sodium salt crosslinked product, manufactured by Nippon Shokubai Co., Ltd.), Sunwet (polyacrylate salt crosslinked product, manufactured by San-Dia Polymers, Ltd.), Aqua Pearl (polyacrylate salt crosslinked product, manufactured by San-Dia Polymers, Ltd.), Aqua Keep (acrylic acid polymer partial sodium salt crosslinked product, manufactured by Sumitomo Seika Chemicals Co., Ltd.), Aquacalk (modified polyalkylene oxide, manufactured by Sumitomo Seika Chemicals Co., Ltd.), KI gel (isobutylene-maleic anhydride copolymer crosslinked product, manufactured by Kuraray Co., Ltd.), and the like.

Examples of the inorganic water-absorbing material include silica gel and inorganic polymers such as Sumecton SA manufactured by Kunimine Industries Co., Ltd.

In the adhesive composition according to the present embodiment, the content of the water-absorbing material in the case of further containing the water-absorbing material is not particularly limited, but from the viewpoint of water absorbability and removability of the water of the adherend and improvement in the adhesiveness to the wet surface, based on 100% by weight of the base material, the content is preferably 0.5 parts by weight or more, more preferably 2 parts by weight or more, and still more preferably 5 parts by weight or more. In addition, the content of the water-absorbing material is, from the viewpoint of adhesive force after moisture curing, preferably 100 prats by weight or less, more preferably 90 parts by weight or less, still more preferably 80 parts by weight or less, and particularly preferably 50 parts by weight based on 100 parts by weight of the base polymer.

The adhesive composition according to the present embodiment may contain a tackifier (tackifying agent) for the purpose of adjusting the elastic modulus and imparting tackiness at the time of initial adhesion. Examples of the tackifier include polybutenes, rosin-based resins, terpene-based resins, petroleum-based resins (e.g., petroleum-based aliphatic hydrocarbon resins, petroleum-based aromatic hydrocarbon resins, and petroleum-based aliphatic/aromatic copolymerized hydrocarbon resins, petroleum-based alicyclic hydrocarbon resins (hydrogenated ones of aromatic hydrocarbon resins), etc.), coumarone-based resins, and the like. In view of compatibility, preferred are petroleum-based resins and rosin-based resins. As the tackifier, one kind may be used or two or more kinds may be used in combination.

The content of the tackifier in the case where it is contained in the adhesive composition is, from the viewpoint of decreasing the elastic modulus, based on 100 parts by weight of the base polymer, preferably 50parts by weight or more, more preferably 70 parts by weight or more, and still more preferably 100 parts by weight or more. In addition, the content of the tackifier is, from the viewpoint of imparting an appropriate cohesive force to the adhesive, preferably 250 parts by weight or less, more preferably 220 parts by weight or less, and still more preferably 200 parts by weight or less based on 100 parts by weight of the base polymer.

To the adhesive composition of the present embodiment, in the ranges where the advantageous effects of the present invention are not inhibited, additives usually added to an adhesive composition, such as viscosity modifiers, release modifiers, plasticizers, softeners, fillers, colorants (pigment, dye, etc.), antiaging agents, surfactants, leveling agents, antifoaming agents, light stabilizers, and the like may be further added.

Examples of the filler include inorganic fillers such as talc, titanium oxide, calcium oxide, magnesium oxide, zinc oxide, calcium carbonate, carbon, silica, clay, mica, barium sulfate, whiskers, magnesium hydroxide, and the like.

Moreover, various common solvents can be used as a solvent to be utilized for an adhesive composition. Examples of the solvents include organic solvents, e.g., esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methyl ethyl ketone and methyl isobutyl ketone; and the like. The solvents may be used alone, or two or more kinds may be used in combination.

In the adhesive composition of the present embodiment, when an adhesive layer is formed, the elastic modulus (initial elastic modulus) of the adhesive layer (before moisture curing) is preferably 400 kPa or less, more preferably 200 kPa or less, and still more preferably 100 kPa or less. When the initial elastic modulus is 400 kPa or less, good followability can be exhibited even to an adherend having an uneven surface. In addition, the water absorbency of the water-absorbing material is well exhibited without inhibiting swelling at the time when the water-absorbing material absorbs water on the wet surface of the adherend. Further, in order to form the adhesive layer satisfactorily, the initial elastic modulus is preferably 0.1 kPa or more.

Here, when the adhesive layer is formed, the initial elastic modulus of the adhesive layer can be calculated from the stress-strain curve measured when a sample is produced by rounding the adhesive layer into a string shape and is stretched at a speed of 50 mm/min using a tensile tester (AG-IS manufactured by Shimadzu Corporation).

An adhesive layer of the present embodiment is formed using the above-mentioned adhesive composition. The formation method thereof is not particularly limited, but a known method can be adopted, and the formation can be performed in accordance with the following method for producing an adhesive sheet.

The adhesive layer can be obtained, for example, in the form of an adhesive sheet by applying the adhesive composition to a substrate to be mentioned later using a known coating method and drying the composition. Moreover, after the adhesive composition is applied to a surface having releasability and dried or cured to thereby form an adhesive layer on the surface, the adhesive layer may be pasted to a non-releasable substrate and then transferred thereto. The method for applying the adhesive composition to a substrate is not particularly limited, and the application can be performed using, for example, a gravure roll coater, a reverse roll coater, a kiss roll coater, a dip roll coater, a bar coater, a knife coater, a spray coater, a fountain die coater, a closed edge die coater, or the like. In addition, a solvent-less coating method such as kneading or extrusion may be applied.

Further, the adhesive layer may be formed by applying the adhesive composition on a release sheet (which may be a sheet-like substrate provided with a release surface).

The thickness of the adhesive layer after drying is not particularly limited, but is preferably 5 to 1000 μm, and more preferably 10 to 500 μm from the viewpoint of exhibiting good followability to an adherend having an uneven surface. The drying temperature may be, for example, 50 to 150°C.

In the case where the adhesive composition (adhesive layer) contains the water-absorbing material, at the surface of the adhesive layer to be pasted to the adherend (pasting surface), the water-absorbing material is exposed at preferably 0.5 to 80% (more preferably 1 to 70%) of the surface area of the pasting surface. When the ratio of the water-absorbing material to the surface area of the pasting surface of the adhesive layer is 0.5% or more, water on the wet surface of the adherend can be absorbed well. Moreover, when the ratio of the water-absorbing material to the surface area of the pasting surface of the adhesive layer is 80% or less, the adhesive layer can be well adhered to the adherend.

An adhesive sheet of the present embodiment has the above-described adhesive layer.

The adhesive sheet of the present embodiment may be an adhesive sheet with a substrate in a form having the adhesive layer on one side or both sides of a sheet-like substrate (support), or may be a substrate-less adhesive sheet in a form where the adhesive layer is held by a release sheet. The concept of the adhesive sheet as referred to herein may include those referred to as an adhesive tape, an adhesive label, an adhesive film, and the like.

Incidentally, the adhesive layer is typically formed continuously, but is not limited to such a form, and may be, for example, an adhesive layer formed in a regular or random pattern, such as dot-like or stripe-like one. Further, the adhesive sheet of the present embodiment may be roll-shaped one or sheet-shaped one. Alternatively, it may be an adhesive sheet in a form where it is further processed into various shapes.

Examples of the material that forms the substrate include polyolefin-based films of polyethylene, polypropylene, ethylene/propylene copolymer, and the like; polyester-based films of polyethylene terephthalate and the like; plastic films of polyvinyl chloride and the like; and paper such as kraft paper and Japanese paper; cloths such as cotton cloth and Sufu (staple fiber) cloth; nonwoven fabrics such as polyester nonwoven fabric and vinylon nonwoven fabric; and metal foils. Also, the thickness of the substrate is not particularly limited.

The plastic films may be unstretched films or stretched (uniaxially stretched or biaxially stretched) films. In addition, the surface of the substrate on which the adhesive layer is provided may be subjected to surface treatment such as application of a primer, corona discharge treatment, or the like.

In the present embodiment, the adhesive sheet may be perforated to provide a through hole. In this way, at the time when the adhesive sheet is attached to an adherend, water on the wet surface of the adherend can be released to the back side (opposite to the pasted surface) of the adhesive sheet through the through hole, so that more water on the wet surface of the adherend can be removed.

In the adhesive sheet of the present embodiment, the adhesive layer may be protected with a release liner (separator, release film) until the time of use. In addition, the protection with the release liner is also useful for maintaining the unreacted state of the unreacted moisture-curable component in the adhesive layer.

As the release liner, a conventional release paper or the like can be used, and is not particularly limited. For example, a substrate having a release-treated layer, a low adhesive substrate composed of a fluorine-based polymer, a low adhesive substrate composed of a nonpolar polymer, or the like can be used. Examples of the substrate having a release-treated layer include plastic films, paper, and the like which have been surface-treated with a release treatment agent such as silicone-based one, long chain alkyl-based one, fluorine-based one, or molybdenum sulfide. Examples of the fluorine-based polymer of the low adhesive substrate composed of a fluorine-based polymer include polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer, and the like. Examples of the nonpolar polymer of the low-adhesive substrate composed of a nonpolar polymer include olefin-based resins (e.g., polyethylene, polypropylene, etc.), and the like. Incidentally, the release liner can be formed by a known or conventional method. In addition, the thickness and the like of the release liner are not particularly limited.

In the adhesive composition according to the present embodiment, the adhesive layer made from the adhesive composition, or the adhesive sheet including the adhesive layer, the moisture-curable component is contained in an unreacted state. Here, the unreacted state indicates a state where a curing reaction is not generated by water (water or moisture). In the present embodiment, all of the moisture-curable component is preferably in an unreacted state, but a part of the moisture-curable component may be in a reacted state as long as the advantageous effects of the present invention are exhibited. This case is also included in the case where the moisture-curable component in the present embodiment is contained in an unreacted state.

In the adhesive sheet (adhesive layer) according to the present embodiment, the maintenance ratio (residual ratio) of the moisture-curable component after storage at 23°C and 50% RH for 72 hours is preferably 50% or more, more preferably 60% or more, and still more preferably 80% or more.

The maintenance ratio can be measured as follows, for example, in the case of using an isocyanate compound as the moisture-curable component.

First, the ratio of the absorbance at 2275 cm$^{-1}$ derived from the isocyanate group and the absorbance at 2250-2255 cm$^{-1}$ derived from the methylene group of the base polymer obtained from the infrared spectroscopic measurement of the adhesive sheet (adhesive layer) immediately after production is calculated. Here, the absorbance ratio is the ratio of the absorbance derived from the above-mentioned isocyanate group to the absorbance derived from the above-mentioned methylene group (the absorbance derived from the isocyanate group/the absorbance derived from the methylene group). In addition, the absorbance ratio obtained from the infrared spectroscopic measurement of the adhesive sheet (adhesive layer) after storage under atmosphere of 23°C and 50% RH for 72 hours is similarly calculated, and the maintenance ratio of the moisture-curable component (isocyanate compound) is calculated from the change ratio thereof. Specifically, it is calculated from the following relational expression.

$$\text{Maintenance ratio of moisture-curable component (isocyanate compound) (\%) =}$$

$$\{(\text{Absorbance ratio of adhesive sheet after storage under atmosphere of 23°C and 50\% RH for}$$

$$\text{72 hours})/(\text{Absorbance ratio of adhesive sheet immediately after production})\} \times 100$$

Also in the case where the moisture-curable component is other than an isocyanate compound, the maintenance ratio of the moisture-curable component can be calculated from the change ratio of absorbance ratio at a wave number at which a representative peak derived from the moisture-curable component appears in the infrared spectroscopic measurement.

With regard to the adhesive composition, the adhesive layer, and the adhesive sheet (adhesive composition and the like) of the present embodiment, in order to maintain the unreacted state of the unreacted moisture-curable component in the adhesive composition and the like, it is preferable to reduce or block the influence of surrounding water (water and moisture). For example, the adhesive sheet of the present embodiment may be packaged in a suitable package. As the material of the package, an aluminum-made moisture-proof bag and the like may be exemplified, but the material is not limited thereto. Further, the atmosphere inside the package may be the air, but may be replaced by an inert gas such as nitrogen or argon. In addition, a desiccant such as silica gel may be also packaged inside the package.

An adherend to which the adhesive sheet of the present embodiment is to be pasted is not particularly limited as long as the adherend is capable of chemically bonding to the moisture-curable component in an unreacted state in the adhesive composition (adhesive layer), but one capable of chemically bonding to the moisture-curable component in an unreacted state in the adhesive composition (adhesive layer) is preferable. For example, in addition to concrete, mortar, asphalt, metal, wood, tiles, and plastic materials such as a coated surface and an inner wall of a bathroom, skin, bone, teeth, inside of a living body, and the like may be mentioned.

EXAMPLES

Hereinafter, embodiments of the present invention will be described in more detail using Examples but the present invention should not be construed as being limited to these examples.

(Production of Adhesive Composition)

(Example 1)

An unmodified solid rubber (styrene-isoprene-styrene block copolymer (SIS), Quintac QTC3520 manufactured by Zeon Corporation): 65 parts by weight as a base polymer and a maleic anhydride-modified liquid rubber (maleic acid-modified liquid polyisoprene rubber, Kuraprene LIR-403 manufactured by Kuraray Co., Ltd.): 35 parts by weight were dissolved in toluene as a solvent. Then, into the solution were blended hexamethylene diisocyanate (HDI) (Basonat HA2000 manufactured by BASF SE): 10 parts by weight as a moisture-curable component, an isobutylene-maleic anhydride copolymer (KI gel manufactured by Kuraray Trading Co., Ltd.): 10 parts by weight Parts as a water-absorbing material, and a tackifying agent (a liquid fully hydrogenated rosin methyl ester resin, M-HDR manufactured by Maruzen Petrochemical Co., Ltd.): 100 parts by weight, thus producing an adhesive composition of Example 1.

(Examples 2 to 8 and Comparative Examples 1 to 4)

An adhesive composition according to each of Examples 2 to 8 and Comparative Examples 1 to 4 was produced in the same manner as in Example 1 except that the composition of the adhesive composition was changed as shown in Table 1.

[Table 1]

Table 1

| | Base polymer (part by weight) | | | | | Tackifying agent (part by weight) | Water-absorbing material (part by weight) | Moisture-cur (part b able component y weight) | |
| --- | --- | --- | --- | --- | --- | --- | --- | --- | --- |
| | Solid rubber | | Liquid rubber | | | | | | |
| | Unmodified | Maleic anhydride-modified | Unmodified | Maleic anhydride-modified | Carboxylic acid-modified | | | Allophanate body HDI | TMP adduct body TDI |
| | QTC3520 | FG1924 | LIR-30 | LIR-403 | LIR-410 | M-HDR | KI gel | HA2000 | C/HL |
| Example 1 | 65 | 0 | 0 | 35 | 0 | 100 | 10 | 10 | 0 |
| Example 2 | 65 | 0 | 0 | 35 | 0 | 100 | 2 | 10 | 0 |
| Example 3 | 65 | 0 | 0 | 35 | 0 | 100 | 30 | 10 | 0 |
| Example 4 | 65 | 0 | 0 | 35 | 0 | 100 | 0 | 10 | 0 |
| Example 5 | 65 | 0 | 0 | 35 | 0 | 100 | 10 | 30 | 0 |
| Example 6 | 65 | 0 | 0 | 35 | 0 | 100 | 10 | 0 | 10 |
| Example 7 | 0 | 40 | 60 | 0 | 0 | 100 | 10 | 10 | 0 |
| Example 8 | 0 | 40 | 0 | 60 | 0 | 100 | 10 | 10 | 0 |
| Comparative Example 1 | 65 | 0 | 35 | 0 | 0 | 100 | 10 | 10 | 0 |
| Comparative Example 2 | 65 | 0 | 35 | 0 | 0 | 100 | 10 | 30 | 0 |
| Comparative Example 3 | 65 | 0 | 35 | 0 | 0 | 100 | 10 | 0 | 10 |

EP 3 719 095 A1

(continued)

| | Base pol ymer (part by weight) | | | | | Tackifying agent (part by weight) | Water-absorbing material (part by weight) | Moisture-cur (part b able component y weight) | |
|---|---|---|---|---|---|---|---|---|---|
| | Solid rubber | | Liquid rubber | | | | | | |
| | Unmodified | Maleic anhydride-modified | Unmodified | Maleic anhydride-modified | Carboxylic acid-modified | | | Allophanate body HDI | TMP adduct body TDI |
| | QTC3520 | FG1924 | LIR-30 | LIR-403 | LIR-410 | M-HDR | KI gel | HA2000 | C/HL |
| Comparative Example 4 | 65 | 0 | 0 | 0 | 35 | 100 | 10 | 10 | 0 |

QTC3520: Quintac QTC3520 (styrene-isoprene-styrene block copolymer (SIS)) manufactured by Zeon Corporation FG1924: FG1924G (maleic anhydride-modified styrene-ethylene-butylene-styrene block copolymer (SEBS)) manufactured by Kraton Polymers Japan Co., Ltd.

LIR-30: Kuraprene LIR-30 (unmodified polyisoprene rubber) manufactured by Kuraray Co., Ltd.

LIR-403: Kuraprene LIR-403 (maleic acid-modified liquid polyisoprene rubber) manufactured by Kuraray Co., Ltd.

LIR-410: Kurapren LIR-410 (carboxylic acid-modified liquid polyisoprene rubber) manufactured by Kuraray Co., Ltd.

M-HDR: M-HDR ((liquid completely hydrogenated rosin methyl ester resin) manufactured by Maruzen Petrochemical Co., Ltd.

KI gel: KI gel (isobutylene-maleic anhydride copolymer) manufactured by Kuraray Trading Co., Ltd.

HA2000: Basonat HA2000 (allophanate body, hexamethylene diisocyanate (HDI)) manufactured by BASF SE C/HL: Coronate HL (TMP adduct body, tolylene diisocyanate (TDI)) manufactured by Tosoh Corporation

(Test for Attachment Strength to Wet Surface)

As a release liner, a polyester-made release film (trade name "Diafoil MRF", thickness of 38 $\mu$m, manufactured by Mitsubishi Polyester Corporation) having a release surface subjected to release treatment on one side was prepared. The adhesive composition according to each example was applied to the release surface of the release liner, dried at 80°C for 5 minutes, and further dried at 130°C for 30 minutes to form an adhesive layer having a thickness of 150 $\mu$m. The other surface of the adhesive layer formed on the above release liner was pasted to the release surface of the release liner the same as the release liner already pasted, thus producing an adhesive sheet, both sides of which were protected with the release liners. The adhesive sheet produced in this manner was cut into a size of a width of 4 cm and a length of 4 cm.

For the adhesive sheets thus produced, a test for attachment strength to wet concrete was carried out in the following manner using the Building Research Institute-type adhesive force tester (BA-450D manufactured by ITANI KOKI MFG. CO., LTD.) equipped with a dedicated jig for tensioning.

First, water-washed concrete was immersed in water for 24 hours to prepare wetted concrete (wet concrete). Next, the release liner was peeled from one side of the produced adhesive sheet, and the adhesive sheet was pasted to the dedicated jig for tensioning of the Building Research Institute-type adhesion tester. Subsequently, the release liner was peeled from the other side of the adhesive sheet, the adhesive sheet was pasted to the wet surface of the wet concrete, and after press-fixing under a pressure of 0.2 MPa, the whole was immersed in water and allowed to stand at 23°C for 72 hours. Thereafter, it was taken out from water and a tensile test was performed, thus measuring the adhesive strength of the adhesive sheet to the wet concrete. Table 2 shows results thereof.

(Test for Attachment Strength to Dry Surface)

The same adhesive sheets as those used in the test for attachment strength to wet surface were prepared, and a test for attachment strength to dry concrete was carried out in the following manner using the Building Research Institute-type adhesive strength tester mentioned above.

There was prepared (dry) concrete which was the same as that used in the test for attachment strength to wet surface and was not immersed in water. Next, the release liner was peeled from one side of the produced adhesive sheet, and the adhesive sheet was pasted to the dedicated jig for tensioning of the Building Research Institute-type adhesive strength tester. Subsequently, the release liner was peeled from the other side of the adhesive sheet, the adhesive sheet was pasted to the dry concrete, and after press-fixing under a pressure of 0.2 MPa, the whole was allowed to stand in the atmospheric air of a temperature of 23°C and a humidity of 50% for 72 hours. Thereafter, the attachment strength of the adhesive sheet to the dry concrete was measured by performing a tensile test. Table 2 shows results thereof.

(Maintenance Ratio of Moisture-Curable Component after Open Storage)

As a release liner, a polyester-made release film (trade name "Diafoil MRF", thickness of 38 $\mu$m, manufactured by Mitsubishi Polyester Corporation) having a release surface subjected to release treatment on one side was prepared. The adhesive composition according to each example was applied to the release surface of the release liner, dried at 80°C for 5 minutes, and further dried at 130°C for 30 minutes to form an adhesive layer having a thickness of 150 $\mu$m. The other surface (a surface opposite to the surface on the release liner side) of the adhesive layer formed on the above release liner was pasted to the release surface of the release liner the same as the release liner already pasted, thus producing an adhesive sheet, both sides of which were protected with the release liners.

For the produced adhesive sheet according to each example, the maintenance ratio of the moisture-curable component in the adhesive sheet (adhesive layer) after storage at 23°C under 50% RH for 72 hours was measured as follows.

First, the ratio of the absorbance at 2275 cm$^{-1}$ derived from the isocyanate group and the absorbance at 2250-2255 cm$^{-1}$ derived from the methylene group of the base polymer obtained from the infrared spectroscopic measurement (using 3100 FT-IR manufactured by Varian) of the adhesive sheet (adhesive layer) immediately after production was calculated. Here, the absorbance ratio is the ratio of the absorbance derived from the above-mentioned isocyanate group to the absorbance derived from the above-mentioned methylene group (the absorbance derived from the isocyanate group/the absorbance derived from the methylene group). In addition, the absorbance ratio obtained from the infrared spectroscopic measurement of the adhesive sheet (adhesive layer) after storage under the atmosphere of 23°C and 50% RH for 72 hours was similarly calculated, and the maintenance ratio of the moisture-curable component (isocyanate compound) was calculated from the change ratio thereof. Specifically, it was calculated from the following relational expression. Table 2 shows results thereof.

Maintenance ratio of moisture-curable component (isocyanate compound) (%) = {(Absorbance ratio of adhesive sheet after storage under atmosphere of 23°C and 50% RH for 72 hours)/(Absorbance ratio of adhesive sheet immediately after production)} $\times$ 100

(Maintenance Ratio of Moisture-Curable Component after Moisture-Proof Storage)

An adhesive sheet produced in the same manner as above was prepared, in which both sides of the adhesive layer having a thickness of 150 $\mu$m were protected with two sheets of the release liners.

After the adhesive sheet was stored in a moisture-proof bag made of aluminum together with a desiccant (silica gel) for 7 days, the maintenance ratio of the moisture-curable component in the adhesive sheet (adhesive layer) immediately after opening the bag was calculated in the same manner as above. Table 2 shows results thereof.

[Table 2]

Table 2

| | Attachment strength (MPa) | | Maintenance ratio of moisture-curable component (%) | |
|---|---|---|---|---|
| | Wet surface | Dry surface | After open storage | After waterproof storage |
| Example 1 | 0.62 | 0.91 | 77.8 | 93.0 |
| Example 2 | 0.68 | 0.89 | 73.6 | 91.3 |
| Example 3 | 0.56 | 0.79 | 67.2 | 85.9 |
| Example 4 | 0.46 | 0.86 | 75.9 | 87.1 |
| Example 5 | 0.72 | 0.96 | 64.1 | 96.3 |
| Example 6 | 0.83 | 1.03 | 56.1 | 81.3 |
| Example 7 | 0.51 | 0.74 | 64.2 | 84.6 |
| Example 8 | 0.89 | 1.24 | 65.0 | 89.6 |
| Comparative Example 1 | 0.22 | 0.30 | 66.7 | 96.9 |
| Comparative Example 2 | 0.23 | 0.42 | 64.9 | 92.1 |
| Comparative Example 3 | 0.21 | 0.36 | 43.9 | 80.8 |
| Comparative Example 4 | 0.93 | 1.38 | 17.6 | 19.4 |

In Examples 1 to 8 in which the requirements of the present invention were satisfied, the maintenance ratio of the moisture-curable component was high and the storage stability was good. Also, high attachment strength to wet concrete was exhibited.

On the other hand, in Comparative Examples 1 to 3 in which only unmodified polymers (unmodified solid rubber and unmodified liquid rubber) were used as the base polymer, the attachment strength to wet concrete was low. Moreover, in Comparative Example 3, the maintenance ratio of the moisture-curable component was low and the storage stability was poor.

Further, in Comparative Example 4 in which the base polymer contained the carboxylic acid-modified liquid rubber, the maintenance ratio of the moisture-curable component was low and the storage stability was poor. The attachment strength shown in Table 2 is the attachment strength measured for the adhesive sheet immediately after production. As for Comparative Example 4, it was separately confirmed that, since the maintenance ratio of the moisture-curable component was low, when the adhesive sheet was stored for a certain period of time or longer, the moisture-curable component reacted and disappeared during storage and the attachment strength (adhesive force) was remarkably decreased.

INDUSTRIAL APPLICABILITY

According to the present invention, there are provided an adhesive composition which can give high adhesive force to a wet surface and also ensures storage stability of a moisture-curable component, an adhesive layer made from the adhesive composition, and an adhesive sheet including the adhesive layer.

While the present invention has been described in detail and with reference to specific embodiments thereof, it will be apparent to those skilled in the art that various changes and modifications can be made therein without departing from the spirit and scope of the invention.

The present application is based on Japanese Patent Application No. 2017-229396 filed on November 29, 2017, and the contents thereof are fully incorporated herein by reference.

**Claims**

1. An adhesive composition comprising a base polymer and a moisture-curable component, wherein the base polymer contains a polymer having a functional group that becomes a functional group capable of reacting with the moisture-curable component through a reaction with water, and the moisture-curable component is contained in an unreacted state.

2. The adhesive composition according to claim 1, wherein the moisture-curable component is capable of chemically bonding to an adherend.

3. The adhesive composition according to claim 1 or 2, wherein the moisture-curable component is an isocyanate compound.

4. The adhesive composition according to any one of claims 1 to 3, wherein a content of the moisture-curable component is 1 to 100 parts by weight based on 100 parts by weight of the base polymer.

5. The adhesive composition according to any one of claims 1 to 4, wherein the base polymer contains a rubber-based polymer.

6. The adhesive composition according to any one of claims 1 to 5, wherein the polymer is a polymer modified with maleic anhydride.

7. The adhesive composition according to any one of claims 1 to 6, which further comprises a water-absorbing material.

8. The adhesive composition according to claim 7, wherein the water-absorbing material is a water-absorbing polymer.

9. The adhesive composition according to claims 7 or 8, wherein a content of the water-absorbing material is 1 to 100 parts by weight based on 100 parts by weight of the base polymer.

10. An adhesive layer comprising the adhesive composition according to any one of claims 1 to 9.

11. An adhesive sheet comprising the adhesive layer according to claim 10.

12. The adhesive sheet according to claim 11, wherein the adhesive layer is formed on a substrate.

# EP 3 719 095 A1

## INTERNATIONAL SEARCH REPORT

| | International application No. |
|---|---|
| | PCT/JP2018/043865 |

**A. CLASSIFICATION OF SUBJECT MATTER**
Int.Cl.  C09J201/00(2006.01)i, C09J7/00(2018.01)i, C09J11/06(2006.01)i,
         C09J11/08(2006.01)i, C09J121/00(2006.01)i, C09J175/04(2006.01)i

According to International Patent Classification (IPC) or to both national classification and IPC

**B. FIELDS SEARCHED**

Minimum documentation searched (classification system followed by classification symbols)
Int.Cl. C09J201/00, C09J7/00, C09J11/06, C09J11/08, C09J121/00, C09J175/04

| Documentation searched other than minimum documentation to the extent that such documents are included in the fields searched | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2014/123183 A1 (MITSUI CHEMICALS, INC.) 14 August 2014, claims 1, 7, examples, table 1 & US 2015/0367601 A1, claims 1, 7, examples, table 1 & EP 2955212 A1 | 1-4, 6, 10-12 |
| X | JP 59-42028 B2 (MITSUBISHI YUKA KABUSHIKI KAISHA) 12 October 1984, claims, examples, tables 1, 2 (Family: none) | 1-4, 6, 10-12 |
| X | JP 2015-144122 A (TOPPAN PRINTING CO., LTD.) 06 August 2015, paragraphs [0096], [0097] & US 2016/0308175 A1, paragraphs [0369], [0374] | 1-4, 6, 10-12 |
| X | JP 2009-272083 A (SUMITOMO ELECTRIC INDUSTRIES, LTD.) 19 November 2009, claim 1, paragraphs [0032], [0034], [0046] (Family: none) | 1-4, 6, 10-12 |
| A | JP 2011-105812 A (MITSUI CHEMICALS, INC.) 02 June 2011, paragraph [0204] (Family: none) | 1-12 |
| A | JP 58-171460 A (NITTO ELECTRIC IND CO., LTD.) 08 October 1983, claims, examples (Family: none) | 1-12 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 January 2019 (10.01.2019) | 22 January 2019 (22.01.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

16

**EP 3 719 095 A1**

## REFERENCES CITED IN THE DESCRIPTION

**Patent documents cited in the description**

- JP 2001354749 A
- JP 2000273418 A
- JP 2017229396 A